# EUROPEAN PATENT SPECIFICATION

(11) **EP 0 755 340 B1**
(45) Date of publication and mention of the grant of the patent: **19.01.2000**
(21) Application number: 95916088.8
(22) Date of filing: 11.04.1995
(51) Int. Cl.: B60R 22/46

(54) **MASS-BODY DRIVE FOR A ROTARY TIGHTENING DEVICE**
MASSENKÖRPERANTRIEB FÜR EINE ROTATIONSSTRAFFERVORRICHTUNG
ENTRAINEMENT A MASSELOTTES DESTINE A UN DISPOSITIF DE SERRAGE ROTATIF

(30) Priority: 11.04.1994 DE 4412150; 30.06.1994 DE 4422450; 01.02.1995 DE 19503143
(43) Date of publication of application: 29.01.1997
(73) Proprietor: AUTOLIV DEVELOPMENT AKTIEBOLAG, 447 83 Vargarda (SE)
(72) Inventor: SCHMIDT, Thomas, D-23663 Timmendorfer Strand (DE); BUTENOP, Klaus, D-25379 Herzhorn (DE); KRÖGER, Doris, D-25436 Tornesch (DE); BARCKMANN, Jörg, D-25436 Tornesch-Ahrenlohe (DE); RODE, René, D-21029 Hamburg (DE)
(74) Representative: Müller, Karl-Ernst, Dr., Dipl.-Ing.
(86) International application number: SE9500388
(87) International publication number: WO9527638

(56) References cited:
- DE-A- 2 931 164
- DE-A- 3 220 498
- DE-C- 2 618 119
- DE-C- 2 814 487

## Description

The invention relates to a rotary tightening device for a safety belt, particularly in motor vehicles, having a belt retractor, whose belt take-up shaft upon triggering of the rotary tightening device coupled thereto is rotated in the take-up direction of the safety belt, there being associated with the belt take-up shaft, as a drive, a driving wheel in whose plane the housing of the belt retractor forms a channel, which embraces the driving wheel over at least part of its periphery, for the through passage of mass bodies acting as driving means upon the driving wheel and lying loosely adjacent to one another in the channel.

A rotary tightening device disclosing the features according to the preamble of claim 1 is described in DE 29 31 164 A1; in the known rotary tightening device, the belt take-up shaft is provided with a driving wheel, the housing in the plane of the driving wheel having a channel which embraces the driving wheel over part of its periphery; in said channel, mass bodies are driven under the action of a pyrotechnic drive out of a tube disposed tangentially to the driving wheel or the channel and as a result of their friction-locking connection to the driving wheel, which for said purpose is provided with a circumferential contoured groove, set said driving wheel in rotation as they run through the channel. According to an embodiment, the mass bodies may take the form of balls made of a suitably hard plastics material. An outlet opening for the mass bodies may be provided at the end of the channel, the mass bodies exiting from the channel through said outlet opening and passing into a suitably provided receiving container.

A drawback of said known rotary tightening device is that the drive is effected throuch friction locking; consequently, on the one hand, considerable energy is lost and, on the other hand, it is difficult to tune the contoured groove and the mass bodies to one another in such a way as to produce a defined friction lock and prevent the mass bodies from becoming wedged or sliding through without power transmission. A further drawback associated with the known rotary tightening device is that-when the hard mass bodies encounter the driving wheel, because the channel for sealing reasons has only slight clearance, a mutual blocking between the periphery of the driving wheel and the mass bodies may arise in the channel, thereby impairing the efficiency of the drive in the event of triggering.

The object of the invention is therefore to improve a rotary tightening device having the features described initially in such a way that the transmission of the drive power, which is imparted to the mass bodies, to the tightening rotation of the belt take-up roller is improved.

The manner in which said object is achieved, plus advantageous refinements and developments of the invention are revealed in the claims appended to the present description.

In principle, the teaching of the invention is such that the driving wheel is provided at its outer periphery with a gearing for receiving the mass bodies, the pitch substantially corresponding to the spacing of the mass bodies. The invention offers the advantage that by means of the gearing formed on the periphery of the driving wheel a form-fit receiving of the mass bodies is realized, as a result of which the power transmission between the mass bodies and the driving wheel for the belt-take-up shaft is markedly improved.

According to an embodiment of the invention, it is provided that the gearing of the driving wheel for receiving the mass bodies is constructed in such a way that the mass bodies, upon engagement so as to overlap the gearing, remain permanently in contact with other; by said means, the efficiency of power transmission is advantageously further improved.

According to an embodiment of the invention, the gearing of the driving wheel is formed by recesses which extend beyond the outer periphery of the driving wheel, the gearing on the periphery of the driving wheel preferably taking the form of cup-shaped recesses which are adapted to the shape of the mass bodies. The effect thereby achieved is an axial, i.e. lateral, guidance of the mass bodies in the driving wheel as well as synchronous running of the mass bodies in the driving wheel. A simultaneous effect achieved by the receiving of the mass bodies in the cup-shaped recesses is optimum threading of the first mass body to encounter the driving wheel or pass into its periphery after triggering of the drive.

Said cup-shaped construction of the flanks of the corresponding gearing moreover provides a large contact surface for the individual mass bodies, thereby substantially reducing deformation of the two structural parts; extreme deformation of the mass bodies would lead to wedging in the driving wheel and hence ultimately to blocking of the driving wheel.

According to an embodiment of the invention, it is provided that the cup-shaped recesses continuously disposed over the periphery of the driving wheel are contiguous. This offers the advantage of reliably maintaining the thrust connection between the individual adjacent mass bodies as they run through the driving wheel and preventing separation of the mass bodies and hence interruption of the drive flow between the mass bodies as well as power losses for separation of the individual mass bodies. According to an embodiment of the invention, said advantage is enhanced in that the cup-shaped recesses continuously disposed over the periphery of the driving wheel overlap one another by a small amount. In an embodiment of the invention, it is provided that the mass bodies take the form of mass balls and the cup-shaped recesses take the form of spherical half-shells in the driving wheel. To said end, in an embodiment the invention further provides that the radius of the cup-shaped recesses lies on the thrust diameter defined by the theoretical points of contact of the successive mass bodies.

To guarantee efficient threading of the mass balls into the driving wheel, according to an embodiment of the invention a funnel-like widening of the cup-shaped recess is provided, and according to an embodiment of the invention the cup-shaped recesses in each case have a transition between them.

An optimum shape of the transition between the cup-shaped recesses is produced when the transition lies on a circular path between the centres of the cup-shaped recesses, said circular path having a diameter corresponding to the diameter of the cup-shaped recess. To achieve a greater contact ratio between the mass balls and the cup-shaped recesses, the circular path may be disposed on a larger diameter than the thrust diameter.

To achieve threading of the individual mass balls, according to an embodiment of the invention it may be provided that the outside diameter of the driving wheel is greater by up to one mass ball diameter than the thrust diameter of the mass balls.

For greater ease of assembly and precise positioning of the mass balls in the channel, the moulded balls may be "magazined" in a continuous casing and said casing may be deformable in order to improve the inward directing process between the mass balls and the gearing of the driving wheel. By virtue of the continuous casing, a continuous string of mass balls is formed and, by simply cutting said string, a required length having the desired number of bodies may be obtained. The mass balls thus positioned are held by the casing by means of friction in the desired position in the channel, the casing simultaneously also effecting an improved sealing-off of the mass balls from the wall of the channel. According to embodiments of the invention, the casing may comprise a plastics tube, in which the moulded balls are received and positioned, or the casing may alternatively be formed by extrusion-coating the mass balls with a suitable material.

According to an embodiment of the invention, with regard to the course of the channel it is provided that the mass balls are conveyed only on a tangential course past the outer periphery of the driving wheel and, after engagement with the gearing of the driving wheel, pass into a collecting container, with the result that the mass balls do not co-rotate with the driving wheel over a greater angular range, thereby avoiding the friction which would otherwise arise. According to an embodiment of the invention, it is provided that the area of contact between the mass balls and the gearing of the driving wheel extends only over an angle at circumference of up to 45°.

In order to guarantee efficient guidance of the mass balls as they run through, according to an embodiment of the invention it is provided that the driving wheel over its periphery has a groove, which cuts the cup-shaped recesses, for receiving a housing-fixed, sword-shaped guide for the mass balls. Here, it may be sufficient to provide a respective sword-shaped guide on the inlet side of the driving wheel and also on the outlet side of the driving wheel for the mass balls. In so far as the arrangement of a groove is mentioned in DE 29 31 164 A1, said groove, described as a contoured groove, has a different function compared to the groove in the context of the present invention.

According to an embodiment of the invention, it may be provided that the driving wheel in the region of the groove is divided into two parts and one half of the driving wheel is connected to the belt take-up shaft; this enables, in particular, greater ease of assembly of the individual parts of the tightening device. According to an embodiment of the invention, it may then be advantageous for the half of the driving wheel, which is associated with the belt take-up shaft, to be integrally constructed with the belt take-up shaft.

Such a construction of the rotary tightening device moreover allows the two halves of the driving wheel, from a production engineering standpoint, to be manufactured from different materials.

A further aspect of the invention is geared towards the arrangement of the channel in a rotary tightening device and, in said regard, in a special embodiment of the invention it is provided that the channel is formed in a tube disposed in the belt retractor housing and following a helical course, which extends from the outside in towards the belt take-up shaft and has a decreasing radius in relation to the belt take-up shaft.

With regard to the mounting of the tube on the belt retractor housing, according to an embodiment of the invention a cap made of a resistant material is provided, which is provided with a form-fit shaping for fixing the tube on the cap; said form-fit shaping may, according to an embodiment of the invention, be such that the tube is provided with a bead and the cap is provided with a matching throat for receiving the bead of the tube; alternatively, the tube may be suspended by a U-shaped bend disposed at its free end in a correspondingly shaped receiver in the cap. The resistant cap is preferably made of metal, e.g. is an aluminium die casting.

It may likewise be provided that the tube is connected in a load-transmitting manner to the housing of the belt retractor by means of suitable and separate holding devices.

It may however be sufficient to embed and hence fix the tube in a cap made of plastics material, which is connected to the belt retractor.

According to embodiments of the invention, the tube itself may be a seamless structural part or comprise two halves which are seam-welded to one another.

According to an embodiment of the invention, it may be provided that the gas generator is disposed with the mass balls in a line in the axis of the tube, in which case the gas generator is locked and fixed in position through suitable shaping in the tube.

To transmit the drive power from the gas generator to the mass balls, a drive piston made of elastic material is disposed, which drive piston for defining an initial volume may be fixed with clearance relative to the gas generator by means of shapings in the tube. Moreover, it may be provided that, to prevent noise, the drive piston is fixed by means of a supporting spring against the gas generator and is acted upon by the spring.

To prevent the drive piston from coming into contact with the gearing of the driving wheel after the mass balls have run through the tube, the transmission piston may be provided with elastic, outward-acting spreading means, the tube at the relevant end having a groove, into which the spreading means engage and hence fix the drive piston in the tube before the drive piston comes into contact with the driving wheel.

Alternatively, overflow bores which effect stopping of the drive piston may be provided in the tube at the end of the appropriate piston travel.

If, in the realization of the invention, a collecting container has already been provided for the mass balls after they have run through and exited from the channel or the tube, according to an embodiment of the invention there is disposed at the end of the tube an open collecting tube made of a flexible material, which opens into the collecting container and suitably brakes the mass balls as they exit from the channel. To keep the overall size of the rotary tightening device to a minimum, according to the invention the use is further provided of a collapsible collecting device which, when not in use, is situated inside the contour of the tightening device and only upon activation by the mass bodies is unfolded beyond the contour of the belt tightening device.

There follows a description of an embodiment of the invention which is illustrated in the drawings. The drawings show:
- Fig.1: a three-dimensional view of a belt take-up shaft with a tightening device drive,
- Fig.2: a detail view of the driving wheel,
- Fig.3: a diagrammatic view of the association between driving wheel and mass balls,
- Fig.4: a detail view of a driving wheel with cup-shaped recesses,
- Fig.5: the subject of Figure 1 in another constructional form,
- Fig.6: the subject of Figure 1 in a further constructional form,
- Fig.7: another embodiment of a rotary tightening device acting upon the belt take-up shaft of a belt retractor, in a diagrammatic plan view of the front of the belt retractor housing,
- Fig.8: another constructional form of the rotary tightening device shown in Figure 7,
- Fig.9: an enlarged view of the connection of the gas generator to the channel in rotary tightening devices according to Figure 7 or 8.

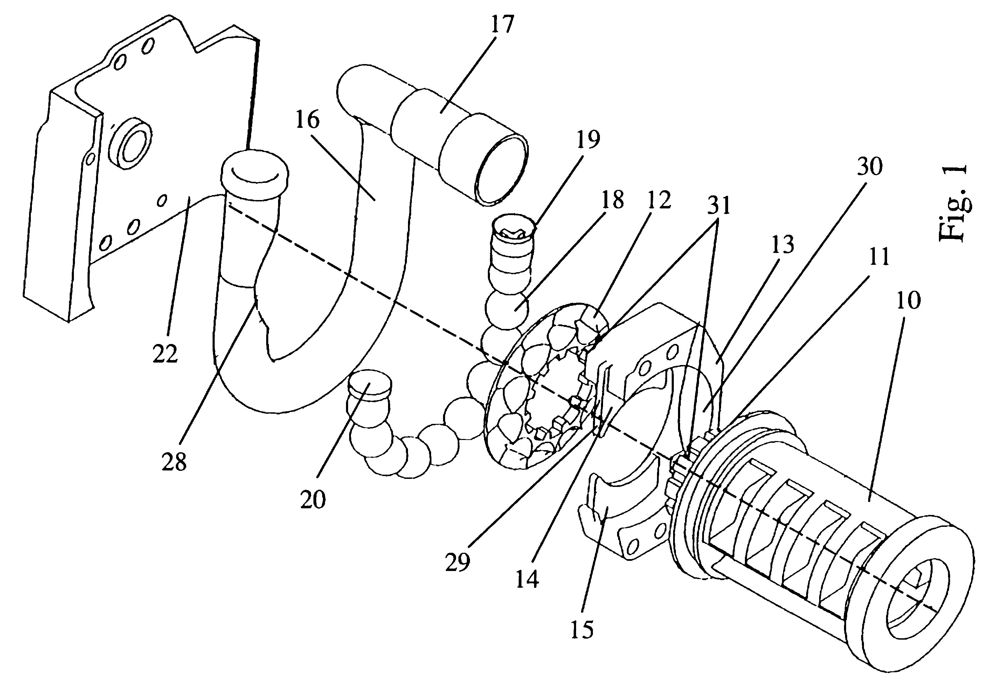

In a manner not shown in greater detail, a belt take-up shaft 10 is rotatably mounted in a belt retractor housing generally of a U-shaped and load-absorbing design. In order to set the belt take-up shaft into a rotation which tightens the webbing wound on the shaft, a pyrotechnically actuated drive is provided, which comprises a driving wheel made up of the two driving wheel halves 11, 12, the driving wheel half 11 in the illustrated embodiment being firmly connected to the belt take-up shaft 10; as Figure 1 reveals, the second driving wheel half 12 during assembly of the rotary tightening device is then placed against the first driving wheel half 11 and connected thereto by means of a gearing 31. Disposed between the two driving wheel halves 11, 12 is a sword box 13 which is to be associated with the housing of the belt retractor, carries sword-shaped guides 14, 15 extending between the two driving wheel halves 11, 12 and whose inner periphery 30 encloses the outer periphery of the driving wheel 11, 12.

Disposed in the plane of the sword box 13 and the driving wheel 11, 12 is a curved tube 16, in the inner channel of which are stored the mass balls 18 used to accelerate the driving wheel 11, 12. Disposed at one end of the tube 16 is a gas generator receiver 17 containing a gas generator (not shown in detail), from which in the event of triggering a gas is released and drives the mass balls 18 out of the tube 16; to said end, a drive piston 19 provided with a seal is disposed in the tube 16 and associated with the gas generator receiver 17, while a tube closure 20 is situated at the opposite end. Seated externally on the tube 16 is a cap 22, which is connected to the associated U-limb (not shown) of the belt retractor housing and in the process also carries and supports the tube 16 and the sword box 13.

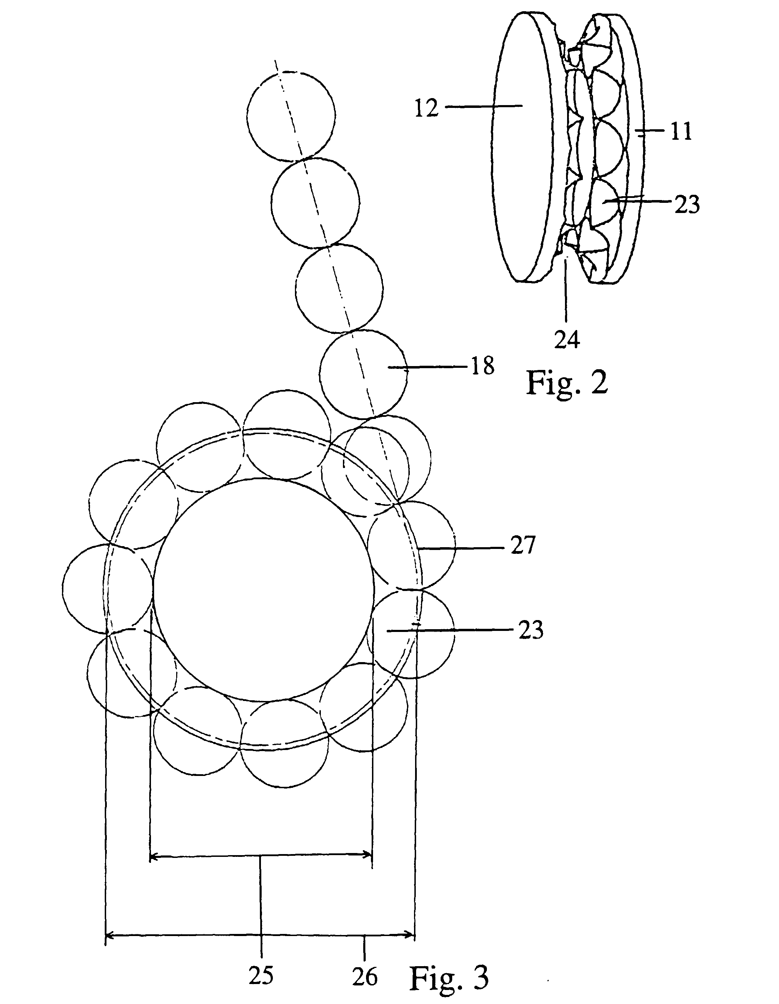

The basic construction of the driving wheel 11, 12 is revealed in detail in Figure 2; continuously disposed on the outer periphery of the driving wheel are cup-shaped recesses 23 which are adapted to the shape of the mass balls 18, i.e. have a radius 32 which is identical to, or slightly greater than, that of the mass balls 18.

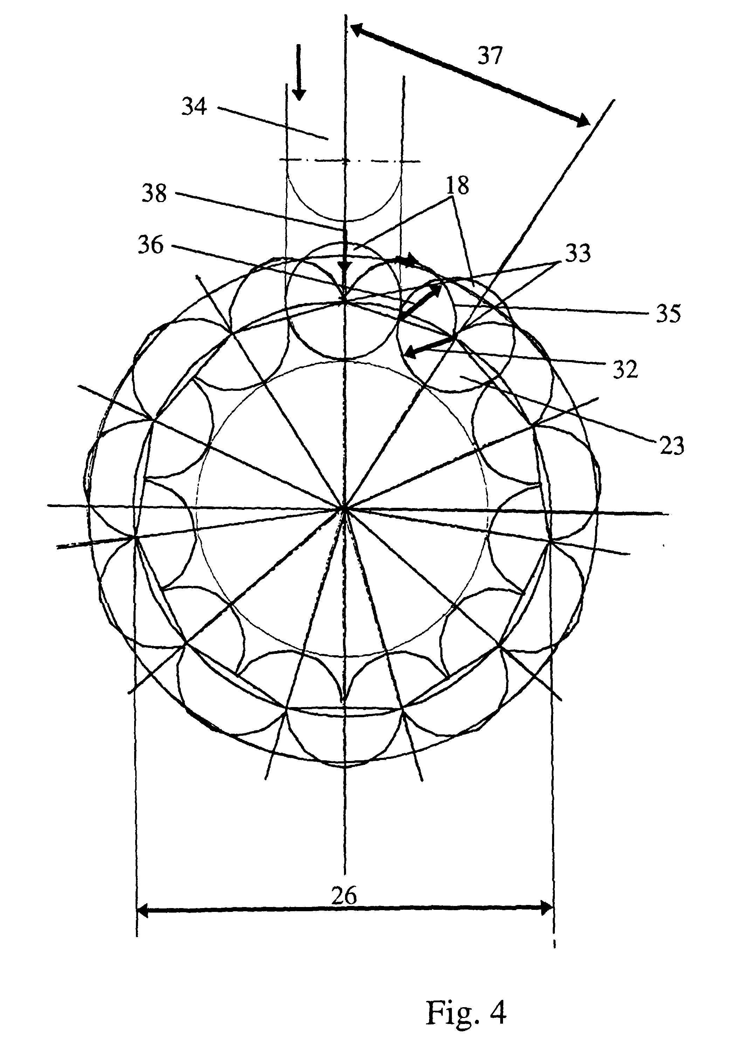

As is shown in detail in Figure 4, the individual cup-shaped recesses 23 lie on the thrust diameter 26 defined by the theoretical points of contact 33 of the successive mass balls 18. Said thrust diameter 26 may be slightly smaller than theoretically calculated in order to take into account the deformation/flattening of the mass balls 18 under the high surface pressure. The individual cup-shaped recesses 23 are manufactured, for example, by radial infeed 38 of a suitable shaping body, for example a milling cutter 34, the transition between the individual cup-shaped recesses 23 being produced by rolling the milling cutter 34 along a circular path 35 between the points of contact 33, said circular path likewise having a radius 36 corresponding to the radius 32 of the cup-shaped recesses; the illustrated driving wheel 11, 12 has a pitch 37 corresponding to the eleven cup-shaped recesses 23.

As is evident from a combined viewing of Figures 1 and 2, the driving wheel comprising the two driving wheel halves 11, 12 has a groove 24, which extends continuously over its periphery and into which the two sword-shaped guides 14, 15 carried by the sword box 13 engage. A sword-shaped guide 15 is first provided in the open inlet region 28 of the mass balls 18 into the driving wheel provided in the tube 16 and facilitates threading of the mass balls 18 into the cup-shaped recesses 23, while a sword-shaped guide 14 acting as a stripper is additionally formed in the outlet region 29, in which the mass balls 18 are to be conveyed back out of the cup-shaped recesses 23 of the driving wheel.

As is evident from Figure 3, the groove diameter 25 lies radially at the deepest point of the cup-shaped recesses 23; in the illustrated embodiment, moreover, the outside diameter 27 of the driving wheel 11, 12 is slightly greater than the thrust diameter 26 defined by the theoretical points of contact 33 of the successive mass balls 18.

Upon triggering of the gas generator seated in the gas generator receiver 17, the released gases drive the mass balls 18 stored in the tube 16 out of the tube, the mass balls 18 in the open inlet region 28 being driven in a form-fit manner into the cup-shaped recesses 23 of the driving wheel 11, 12, with assisted guidance by the sword-shaped guide 15 of the sword box 13; the mass balls driven successively in mutual contact radially into the driving wheel 11, 12 set the driving wheel 11, 12 in rotation so that the belt take-up shaft 10 executes the desired rotational movement in tightening direction. After the mass balls 18 have run past radially, the mass balls 18 are removed and collected by means of the sword-shaped guide 14 acting as a stripper. During said process, the sword-shaped guides 14, 15 prevent an escape of the individual mass balls 18 from the desired tangential path into the driving wheel 11, 12 which guarantees optimum power transmission. In order also to guarantee operation of the belt retractor after the tightening process, a clean separation of the mass balls 18 from the driving wheel 11, 12 is provided by the sword-shaped guide 14 acting as a stripper.

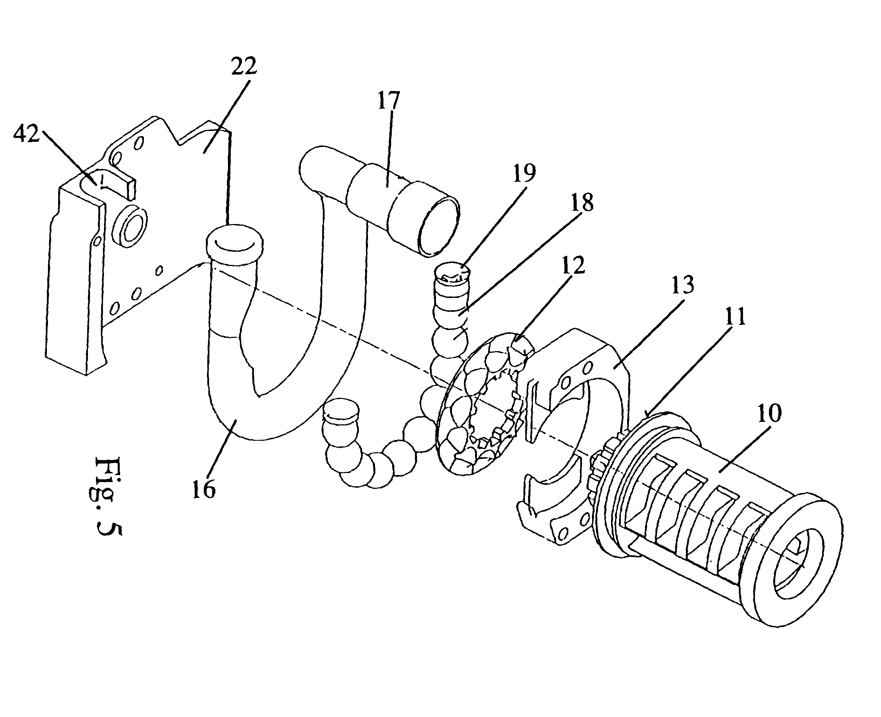

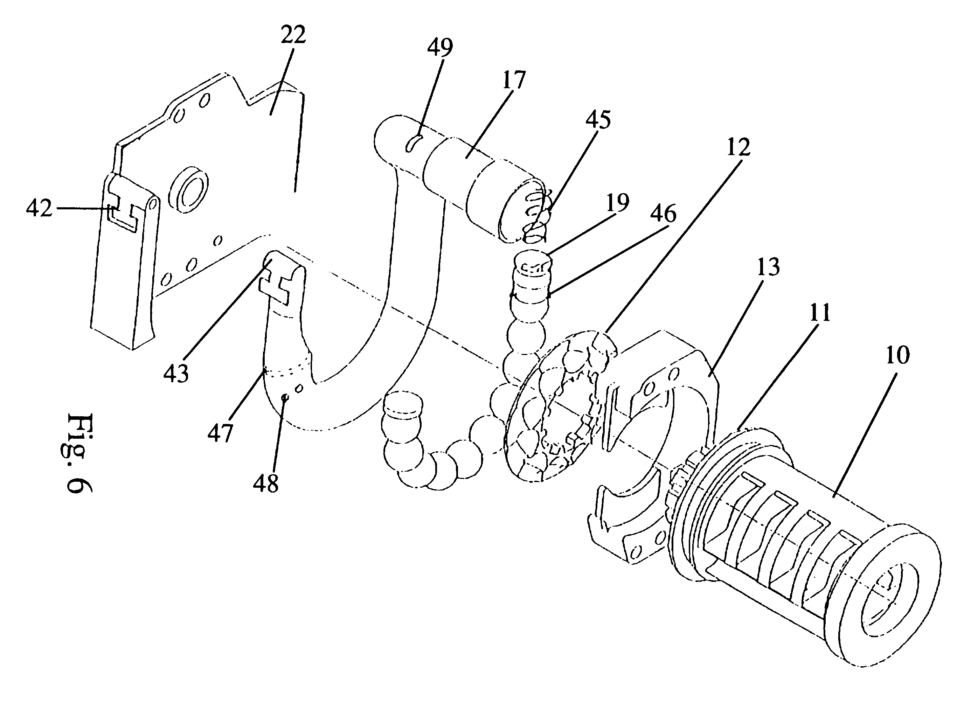

Figures 5 and 6 each show different constructions with regard to the mounting of the tube 16 on the cap 22, the cap for absorbing stress being made of metal, preferably being an aluminium die casting, and being firmly connected to the belt retractor housing (not shown). In the embodiment shown in Fig.5, the tube 16 at its opposite end to the gas generator receiver 17 has a bead 41, associated with which is a correspondingly shaped throat 42 on the cap 22 so that, upon assembly of the structural parts, the tube 16 is fixed on the cap 22. An alternative fastening is shown in Figure 6, in which the corresponding end of the tube 16 carries a U-shaped bend 43, the free end of which is T-shaped; the cap 22 has a matching receiver 44 of a corresponding shape, at which the tube 16 may therefore be fixed.

Figure 6 reveals further details, over and above the view of Figure 1, whereby operation of the rotary tightening device is guaranteed.

Thus, to prevent clattering noises, the drive piston 19 or alternatively the first mass body 18 is supported by means of a supporting spring 45 against the gas generator seated in the gas generator receiver 17. The drive piston 19 further has on its outer periphery elastic, outward-acting spreading means 46 and in the tube 16 there is, associated with said spreading means 46 at the end of the distance to be travelled by the drive piston 19 in the tube 16, a groove 47 in which the spreading means 46 of the drive piston 19 catch, thereby preventing the drive piston 19 from entering the recesses 23 of the driving wheel 11, 12. Alternatively or additionally, overflow bores 48 may be formed in the tube 16 at the relevant end of the operating travel of the drive piston 19, the drive piston 19 upon reaching said overflow bores being no longer pressure-loaded owing the outward flow of the propelling gas and hence being brought to a standstill.

In the region of the transition between the gas generator disposed in the gas generator receiver 17 and the drive piston 19, the gas generator receiver 17 may have a desired breaking point 49, which acts as a pressure relief device in order, e.g. in the event of blocking of the drive, to guarantee safe discharge of the excess pressure generated by the gas generator in the system because, in the event of such excess pressure, the desired breaking point tears open and releases a window enabling the gas to flow off.

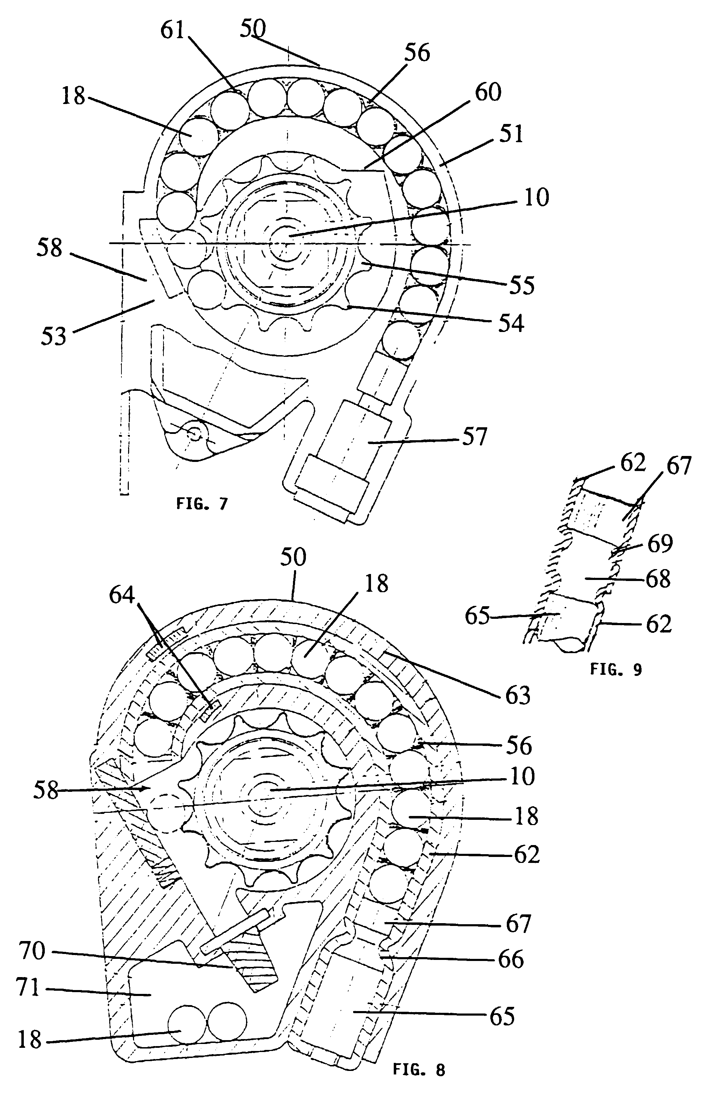

Figures 7 and 8 illustrate embodiments of the invention, in which the driving wheel for a rotary tightening device takes the form of a simple pinion provided with an external gearing and is connected to the belt take-up shaft.

In the embodiment shown in Figure 7, the belt take-up shaft 10 is mounted in a housing 51 of a belt retractor 50 and engages with an axial extension through the associated side limb 53 of the housing 51; mounted on the extension in a keyed manner is a pinion 54 as a driving wheel with an external gearing 55.

The side limb 53 of the housing 51, or a separate structural part mounted thereon, forms within it a channel 56 which at one end has a preferably pyrotechnic unit 57. The channel 56 is formed in the housing 51 or its side limb 53 or the associated structural part with a helical course directed from the outside in towards the belt take-up shaft 10, and indeed with a decreasing radius in relation to the belt take-up shaft 10, until the channel 56 tangentially meets the pinion 54 or its external gearing 55 and at said point forms, for the mass bodies 18 which are situated in the channel 56 and are to be driven in the event of triggering by the pyrotechnic drive unit, an area of engagement 58 with the external gearing 55 of the pinion 54.

The channel 56 encloses part of the periphery of the pinion 54 and opens into an outlet opening 60 in an offset plane, through which the mass bodies 18 driven in the channel 56 leave the channel 56, for which purpose the belt retractor 50 is provided with a collecting container (not shown in detail) of the type basically described in DE 29 31 164 A1.

The mass bodies 18 are surrounded by a continuous casing 61 so that a continuous string of mass bodies is formed. The casing 61 may comprise a plastics tube, in which the mass bodies 18 are introduced and positioned, or alternatively a continuous and coherent extrusion coating of the individual mass bodies. By cutting the continuous string the required length may be adjusted, said string because of the flexible nature of its material on the one hand effecting a sealing-off of the mass bodies 18 in the channel 56 but at the same time also improving the inward directing process between the mass bodies 18 and the gearing 55 of the pinion 54.

The alternative embodiment of a rotary tightening device shown in detail in Figure 8 is substantially identical in construction to the embodiment according to Figure 7 described above and, to said extent, identical parts are provided with the same reference numerals. In the embodiment shown in Figure 8, the channel 56 extends in a separate and, in accordance with the embodiment of Figure 7, curved tube 62, which is seamless or comprises two seam-welded halves; the tube 62 is inserted in a cap 63, made of plastics material and connected to the housing 51 of the belt retractor 50, and connected with an interference fit to the housing 51 by means of clamps 64.

Integrated into the tube 62 at its inlet end is a gas generator 65, which is fixed by means of a necking 66 in the tube. Disposed between the outlet of the gas generator 65 and the first mass body 18 is a transmission piston 67 as a drive piston made of an elastic material, said transmission piston 67 in order to form an initial volume 68 being disposed with clearance relative to the gas generator 65 and, on the other hand, being fixed by a shaping 69 in the form of neckings in the manner shown in detail in Figure 9.

The area of action between the mass balls 18 and the external gearing 55 of the pinion 54 extends only over the tangential region so that the mass balls 18 are in contact with the pinion gearing 55 over an angle at circumference of at most 45° and are then discharged in the opening formed rectilinearly relative to the channel 56. For said purpose, a collecting container 71 is formed in the housing 51, there being associated with the outlet of the channel 56 an open collecting tube 70 made of an elastic material, by means of which the discharged mass balls 18 are braked.

## Claims

1. Rotary tightening device for a safety belt, particularly in motor vehicles, having a belt retractor, whose belt take-up shaft (10) upon triggering of the rotary tightening device coupled thereto is rotated in the take-up direction of the safety belt, there being associated with the belt take-up shaft (10), as a drive, a driving wheel (11,12,54) in whose plane the housing of the belt retractor forms a channel, which embraces the driving wheel (11,12,54) over at least part of its periphery, for the through passage of accelerated mass bodies (18) acting as driving means upon the driving wheel (11,12,54) and lying loosely adjacent to one another in the channel, characterized in that the driving wheel (11, 12, 54) is provided at its outer periphery with a gearing eg. recesses (23; 55) for receiving the mass bodies (18), the pitch of the gearing substantially corresponding to the spacing of the mass bodies (18).

2. Rotary tightening device according to claim 1, characterized in that the gearing eg. recesses (23) of the driving wheel (11, 12) is fashioned in such a way that the mass bodies (18), upon engagement so as to overlap the gearing eg. recesses (23), remain permanently in contact with one another.

3. Rotary tightening device according to claim 2, characterized in that the gearing of the driving wheel (11, 12) is formed by recesses (23) which extend beyond the outer periphery of the driving wheel.

4. Rotary tightening device according to one of claims 1 to 3, characterized in that the gearing of the driving wheel (11, 12) takes the form of cup-shaped recesses (23) which lie on the outer periphery of the driving wheel and are adapted to the shape of the mass bodies (18).

5. Rotary tightening device according to claim 4, characterized in that the cup-shaped recesses (23) continuously disposed over the periphery of the driving wheel (11, 12) are contiguous.

6. Rotary tightening device according to claim 4, characterized in that the cup-shaped recesses (23) continuously disposed over the periphery of the driving wheel (11, 12) overlap one another by a small amount.

7. Rotary tightening device according to one of claims 1 to 6, characterized in that the mass bodies (18) take the form of mass balls and the cup-shaped recesses (23) are spherical half-shells.

8. Rotary tightening device according to one of claims 1 to 7, characterized in that the radius of the cup-shaped recesses (23) lies on the thrust diameter (26) defined by the theoretical points of contact of the successive mass balls (18).

9. Rotary tightening device according to one of claims 1 to 8, characterized in that the cup-shaped recesses (23) are widened in a funnel-like manner.

10. Rotary tightening device according to one of claims 1 to 9, characterized in that the cup-shaped recesses (23) have a transition from one recess to the other.

11. Rotary tightening device according to claim 10, characterized in that the transition between the cup-shaped recesses (23) lies on a circular path between the centre of the cup-shaped recesses (23), the circular path having a diameter corresponding to the diameter of the cup-shaped recess (23).

12. Rotary tightening device according to one of claims 1 to 11, characterized in that the outside diameter (27) of the driving wheel (11, 12) is up to one mass ball diameter greater than the thrust diameter (26) of the mass balls (18).

13. Rotary tightening device according to one of claims 1 to 12, characterized in that the mass balls (18) are connected in a magazine-like manner to one another by means of a flexible casing (61).

14. Rotary tightening device according to claim 13, characterized in that the casing (61) comprises a plastics tube in which the mass balls (18) are received and positioned.

15. Rotary tightening device according to claim 13, characterized in that the casing (61) comprises an extrusion coating of a suitable material.

16. Rotary tightening device according to one of claims 1 to 15, characterized in that the mass balls (18) are guided on a tangential course past the outer periphery of the driving wheel (11, 12; 54) and, after engagement with the gearing eg. recesses (23; 55) of the driving wheel, are guided directly into a collecting chamber (71).

17. Rotary tightening device according to claim 16, characterized in that the area of action between mass balls (18) and the driving wheel gearing eg. recesses (23; 55) extends over an angle at circumference of up to 45°.

18. Rotary tightening device according to one of claims 1 to 17, characterized in that the driving wheel (11, 12) over its periphery has a groove (24), which cuts the cup-shaped recesses (23), for receiving a housing-fixed, sword-shaped guide (14, 15) for the mass balls (18).

19. Rotary tightening device according to claim 18, characterized in that a respective sword-shaped guide (15, 14) is provided both in the inlet region (28) of the driving wheel (11, 12) and in the outlet region (29) for the mass balls (18) on the driving wheel (11, 12).

20. Rotary tightening device according to one of claims 1 to 19, characterized in that the driving wheel (11, 12) is divided into two parts in the region of the groove (24) and the one half (11) of the driving wheel is connected to the belt take-up shaft (10).

21. Rotary tightening device according to claim 20, characterized in that the half (11) of the driving wheel associated with the belt take-up shaft (10) is integrally constructed with the belt take-up shaft (10).

22. Rotary tightening device according to claim 20 or 21, characterized in that the two halves (11, 12) of the driving wheel are made of different materials.

23. Rotary tightening device according to claim 1, characterized in that the channel (56) is formed in a tube (16, 62), which is fixed on the belt retractor (50) and has a helical course directed from the outside in towards the belt take-up shaft (10) and having a decreasing radius relative to the belt take-up shaft (10).

24. Rotary tightening device according to claim 23, that, for mounting the tube (16) on the belt retractor housing, a cap (22) made of a resistant material is provided with a form-fit shaping (42, 44) for fixing the tube (16) on the cap (22).

25. Rotary tightening device according to claim 24, characterized in that the tube (16) is provided with a bead (41) and the cap (22) is provided with a matching throat (42) for receiving the bead (41) of the tube (16).

26. Rotary tightening device according to claim 24, characterized in that the tube (16) at its free end may be suspended by a U-shaped bend (43) in a correspondingly shaped receiver (44) in the cap (22).

27. Rotary tightening device according to claim 23, characterized in that the tube (16, 62) is mounted in a load-transmitting manner on the belt retractor housing by means of suitable and separate holding devices.

28. Rotary tightening device according to claim 23, characterized in that the tube (62) is embedded in a cap (63) made of plastics material which is connected to the belt retractor housing.

29. Rotary tightening device according to one of claims 23 to 28, characterized in that the tube (16, 62) is a seamless structural part.

30. Rotary tightening device according to one of claims 23 to 28, characterized in that the tube (16, 62) comprises two halves which are seam welded to one another.

31. Rotary tightening device according to one of claims 23 to 30, characterized in that the tube (62) receives the gas generator (65) for driving the mass balls (18) in its longitudinal axis subsequent to the mass balls (18), the gas generator being fixed in the tube (62) by means of a shaping (66, 69).

32. Rotary tightening device according to one of claims 23 to 31, characterized in that a drive piston (19, 67) made of elastic material is disposed between the gas generator (17, 65) and the mass balls (18).

33. Rotary tightening device according to claim 31, characterized in that the drive piston (19, 67) for defining an initial volume (68) is fixed with clearance relative to the gas generator by means of shapings (66, 69) in the tube (62).

34. Rotary tightening device according to one of claims 23 to 33, characterized in that the drive piston (19) is supported against the gas generator by means of a supporting spring (45).

35. Rotary tightening device according to one of claims 23 to 34, characterized in that provided at the outer periphery of the drive piston (19) are elastically outwardly directed spreading means (46) which engage into a groove (47), which is disposed in the running direction of the mass balls through the tube at the end of the running distance, and fix the drive piston (19) in the tube (16).

36. Rotary tightening device according to one of claims 23 to 34, characterized in that overflow bores (48) for escape of the propellant are disposed at the end of the travel of the drive piston (19) through the tube (16).

37. Rotary tightening device according to one of claims 23 to 36, characterized in that a pressure relief device in the form of an opening openable by means of a desired breaking point (49) is provided in the region of the initial volume (68) between the gas generator and drive piston (19).

38. Rotary tightening device according to one of claims 1 to 37, having a collecting container for the mass bodies after their run through the channel, characterized in that there is disposed, as a collecting device, an open collecting tube (70) made of a flexible material which opens into a collecting chamber (71).

39. Rotary tightening device according to one of claims 1 to 37, having a collecting container for the mass bodies after their run through the channel, characterized in that the collecting device is disposed in a folded manner in the contour of the rotary tightening device and may unfold upon triggering of the rotary tightening device.

## Patentansprüche

1. Rotationsstraffer für einen Sicherheitsgurt, insbesondere in Kraftfahrzeugen, mit einem Gurtaufroller, dessen Gurtaufwickelwelle (10) bei Auslösung des daran gekuppelten Rotationsstraffers in Aufwickelrichtung des Sicherheitsgurtes gedreht wird, wobei der Gurtaufwickelwelle (10) als Antrieb ein Antriebsrad (11, 12, 54) zugeordnet ist, in dessen Ebene das Gehäuse des Gurtaufrollers einen das Antriebsrad (11, 12, 54) über mindestens einen Teilumfang umgreifenden Kanal zur Durchleitung von auf das Antriebsrad einwirkenden, in dem Kanal lose aneinander liegenden beschleunigten Massekörpern (18) als Antriebsmittel ausbildet, dadurch gekennzeichnet, daß das Antriebsrad (11, 12, 54) auf seinem äußeren Umfang mit einer Verzahnung z. B. Ausnehmungen (23; 55) zur Aufnahme der Massekörper (18) versehen ist, wobei die Teilung der Verzahnung in etwa dem Abstand der Massekörper (18) zueinander entspricht.

2. Rotationsstraffer nach Anspruch 1, dadurch gekennzeichnet, daß die Verzahnung z. B. Ausnehmungen (23) des Antriebsrades (11, 12) derart gestaltet ist, daß die Massekörper (18) beim Eingriff die Verzahnung z. B. Ausnehmungen (23) übergreifend in permanenter Anlage aneinander verbleiben.

3. Rotationsstraffer nach Anspruch 2, dadurch gekennzeichnet, daß die Verzahnung des Antriebsrades (11, 12) durch sich über den äußeren Umfang des Antriebsrades erstreckende Ausnehmungen (23) gebildet ist.

4. Rotationsstraffer nach einem der Ansprüche 1 bis 3, dadurch gekennzeichnet, daß die Verzahnung des Antriebsrades (11, 12) als auf dessen äußeren Umfang liegende und der Form der Massekörper (18) angepaßte kalottenförmige Ausnehmungen (23) ausgebildet ist.

5. Rotationsstraffer nach Anspruch 4, dadurch gekennzeichnet, daß die über den Umfang des Antriebsrades (11, 12) fortlaufend angeordneten kalottenförmigen Ausnehmungen (23) einander berühren.

6. Rotationsstraffer nach Anspruch 4, dadurch gekennzeichnet, daß die über den Umfang des Antriebsrades (11, 12) fortlaufend angeordneten kalottenförmigen Ausnehmungen (23) sich um einen geringen Betrag überschneiden.

7. Rotationsstraffer nach einem der Ansprüche 1 bis 6, dadurch gekennzeichnet, daß die Massekörper (18) als Massekugeln ausgebildet und die kalottenförmigen Ausnehmungen (23) kugelförmige Halbschalen sind.

8. Rotationsstraffer nach einem der Ansprüche 1 bis 7, dadurch gekennzeichnet, daß der Radius der kalottenförmigen Ausnehmungen (23) auf dem durch die theoretischen Berührungspunkte der aufeinanderfolgenden Massekugeln (18) definierten Schubdurchmesser (26) liegt.

9. Rotationsstraffer nach einem der Ansprüche 1 bis 8, dadurch gekennzeichnet, daß die kalottenförmigen Ausnehmungen (23) trichterförmig erweitert sind.

10. Rotationsstraffer nach einem der Ansprüche 1 bis 9, dadurch gekennzeichnet, daß die kalottenförmigen Ausnehmungen (23) einen Übergang von einer Ausnehmung zur anderen Ausnehmung aufweisen.

11. Rotationsstraffer nach Anspruch 10, dadurch gekennzeichnet, daß der Übergang zwischen den kalottenförmigen Ausnehmungen (23) auf einer Kreisbahn zwischen den Mittelpunkten der kalottenförmigen Ausnehmungen (23) liegt, wobei die Kreisbahn einen Durchmesser entsprechend dem Durchmesser der kalottenförmigen Ausnehmung (23) aufweist.

12. Rotationsstraffer nach einem der Ansprüche 1 bis 11, dadurch gekennzeichnet, daß der Außendurchmesser (27) des Antriebsrades (11, 12) um bis zu einem Massekugeldurchmesser größer als der Schubdurchmesser (26) der Massekugeln (18) ist.

13. Rotationsstraffer nach einem der Ansprüche 1 bis 12, dadurch gekennzeichnet, daß die Massekugeln (18) mittels einer nachgiebigen Ummantelung (61) magazinartig miteinander verbunden sind.

14. Rotationsstraffer nach Anspruch 13, dadurch gekennzeichnet, daß die Ummantelung (61) aus einem die Massekugeln (18) in sich aufnehmenden und positionierenden Kunststoffschlauch besteht.

15. Rotationsstraffer nach Anspruch 13, dadurch gekennzeichnet, daß die Ummantelung (61) aus einer Umspritzung aus einem geeigneten Material besteht.

16. Rotationsstraffer nach einem der Ansprüche 1 bis 15, dadurch gekennzeichnet, daß die Massekugeln (18) in tangentialem Verlauf an dem Außenumfang des Antriebsrades (11, 12; 54) vorbeigeführt und nach Eingriff mit dessen Verzahnung z. B. Ausnehmungen (23; 55) unmittelbar in einen Auffangraum (71) geführt sind.

17. Rotationsstraffer nach Anspruch 16, dadurch gekennzeichnet, daß sich der Eingriffsbereich zwischen Massekugeln (18) und der Antriebsradverzahnung z. B. Ausnehmungen (23; 55) über einen Umfangswinkel bis zu 45 Grad erstreckt.

18. Rotationsstraffer nach einem der Ansprüche 1 bis 17, dadurch gekennzeichnet, daß das Antriebsrad (11, 12) über seinen Umfang eine die kalottenförmigen Ausnehmungen (23) schneidende Nut (24) zur Aufnahme einer gehäusefesten schwertförmigen Führung (14, 15) für die Massekugeln (18) aufweist.

19. Rotationsstraffer nach Anspruch 18, dadurch gekennzeichnet, daß je eine schwertförmige Führung (15, 14) im Einlaßbereich (28) des Antriebsrades (11, 12) und in dem Austrittsbereich (29) für die Massekugeln (18) an dem Antriebsrad (11, 12) vorgesehen ist.

20. Rotationsstraffer nach einem der Ansprüche 1 bis 19, dadurch gekennzeichnet, daß das Antriebsrad (11, 12) im Bereich der Nut (24) zweigeteilt ausgebildet und die eine Hälfte (11) des Antriebsrades mit der Gurtaufwickelwelle (10) verbunden ist.

21. Rotationsstraffer nach Anspruch 20, dadurch gekennzeichnet, daß die der Gurtaufwickelwelle (10) zugeordnete Hälfte (11) des Antriebsrades mit der Gurtaufwickelwelle (10) einstückig ausgebildet ist.

22. Rotationsstraffer nach Anspruch 20 oder 21, dadurch gekennzeichnet, daß die beiden Hälften (11, 12) des Antriebsrades aus unterschiedlichen Werkstoffen bestehen.

23. Rotationsstraffer nach Anspruch 1,
dadurch gekennzeichnet, daß
der Kanal (56) in einem an dem Gurtaufroller (50) festgelegten und einen von außen nach innen zur Gurtaufwickelwelle (10) hin gerichteten spiralförmigen Verlauf mit einem bezogen auf die Gurtaufwickelwelle (10) abnehmenden Radius aufweisenden Rohr (16, 62) ausgebildet ist.

24. Rotationsstraffer nach Anspruch 23, daß zur Halterung des Rohres (16) an dem Gurtaufrollergehäuse eine Abdeckkappe (22) aus einem widerstandsfähigen Material mit einer Formschlußgestaltung (42, 44) zum Festlegen des Rohres (16) an der Abdeckkappe (22) vorgesehen ist.

25. Rotationsstraffer nach Anspruch 24, dadurch gekennzeichnet, daß das Rohr (16) mit einem Wulst (41) und die Abdeckkappe (22) mit einer passenden Einziehung (42) zur Aufnahme des Wulstes (41) des Rohres (16) versehen sind.

26. Rotationsstraffer nach Anspruch 24, dadurch gekennzeichnet, daß das Rohr (16) an seinem freien Ende mit einer U-förmigen Abkröpfung (43) in einer entsprechend geformten Aufnahme (44) in der Abdeckkappe (22) einhängbar ist.

27. Rotationsstraffer nach Anspruch 23, dadurch gekennzeichnet, daß das Rohr (16, 62) an dem Gurtaufrollergehäuse durch geeignete und gesonderte Halteeinrichtungen kraftübertragend angebracht ist.

28. Rotationsstraffer nach Anspruch 23, dadurch gekennzeichnet, daß das Rohr (62) in einer mit dem Gurtaufrollergehäuse verbundenen Abdeckkappe (63) aus Kunststoff eingebettet ist.

29. Rotationsstraffer nach einem der Ansprüche 23 bis 28, dadurch gekennzeichnet, daß das Rohr (16, 62) als gezogenes Bauteil ausgebildet ist.

30. Rotationsstraffer nach einem der Ansprüche 23 bis 28, dadurch gekennzeichnet, daß das Rohr (16, 62) aus zwei miteinander rollnahtverschweißten Hälften zusammengesetzt ist.

31. Rotationsstraffer nach einem der Ansprüche 23 bis 30, dadurch gekennzeichnet, daß das Rohr (62) den Gasgenerator (65) zum Antrieb der Massekugeln (18) in seiner Längsachse auf die Massekugeln (18) folgend aufnimmt, wobei der Gasgenerator in dem Rohr (62) durch eine Formgestaltung (66, 69) festgelegt ist.

32. Rotationsstraffer nach einem der Ansprüche 23 bis 31, dadurch gekennzeichnet, daß zwischen Gasgenerator (17, 65) und Massekugeln (18) ein Antriebskolben (19, 67) aus elastischem Material angeordnet ist.

33. Rotationsstraffer nach Anspruch 31, dadurch gekennzeichnet, daß der Antriebskolben (19, 67) zur Definition eines Vorvolumens (68) mit Abstand zum Gasgenerator mittels Formgestaltungen (66, 69) in dem Rohr (62) festgelegt ist.

34. Rotationsstraffer nach einem der Ansprüche 23 bis 33, dadurch gekennzeichnet, daß der Antriebskolben (19) gegen den Gasgenerator mittels einer Abstützfeder (45) abgestützt ist.

35. Rotationsstraffer nach einem der Ansprüche 23 bis 34, dadurch gekennzeichnet, daß am äußeren Umfang des Antriebskolbens (19) elastisch nach außen gerichtete Spreizmittel (46) vorgesehen sind, die in eine in Durchlaufrichtung der Massekugeln durch das Rohr am Ende des Durchlaufweges angeordnete Nut (47) eingreifen und den Antriebskolben (19) in dem Rohr (16) festlegen.

36. Rotationsstraffer nach einem der Ansprüche 23 bis 34, dadurch gekennzeichnet, daß am Ende des Durchlaufweges des Antriebskolbens (19) durch das Rohr (16) Überströmbohrungen (48) zum Austritt des Treibmittels angeordnet sind.

37. Rotationsstraffer nach einem der Ansprüche 23 bis 36, dadurch gekennzeichnet, daß im Bereich des Vorvolumens (68) zwischen Gasgenerator und Antriebskolben (19) eine Überdrucksicherung in Form einer über eine Sollbruchstelle (49) öffenbare Öffnung vorgesehen ist.

38. Rotationsstraffer nach einem der Ansprüche 1 bis 37, mit einem Auffangbehälter für die Massekörper nach deren Durchlauf durch den Kanal, dadurch gekennzeichnet, daß als Auffangeinrichtung ein offener, in einen Auffangraum (71) mündender Auffangschlauch (70) aus einem nachgiebigen Material angeordnet ist.

39. Rotationsstraffer nach einem der Ansprüche 1 bis 37 mit einem Auffangbehälter für die Massekörper nach deren Durchlauf durch den Kanal, dadurch gekennzeichnet, daß die Auffangeinrichtung in der Kontur des Rotationsstraffers eingefaltet angeordnet und bei Auslösung des Rotationsstraffers entfaltbar ist.

## Revendications

1. Dispositif de serrage rotatif pour ceinture de sécurité, en particulier dans les véhicules automobiles, ayant un rétracteur de ceinture, dont l'arbre d'enroulement de ceinture (10), au moment du déclenchement du dispositif de serrage rotatif accouplé à celui-ci, est mis en rotation dans la direction d'enroulement de la ceinture de sécurité, l'arbre d'enroulement de ceinture (10) étant associé, pour permettre l'entraînement, à une roue d'entraînement (11, 12, 54), dans le plan de laquelle le logement du rétracteur de ceinture forme un conduit, qui entoure la roue d'entraînement (11, 12, 54) sur au moins une partie de sa périphérie, pour le passage, d'un bout à l'autre du conduit, de corps de masse accélérés (18) agissant comme moyens d'entraînement sur la roue d'entraînement (11, 12, 54) et disposés de manière adjacente et libre les uns par rapport aux autres dans le conduit, caractérisé en ce que la roue d'entraînement (11, 12 ,54) est munie sur sa périphérie externe d'un engrenage, par exemple des cavités (23, 55), permettant de recevoir les corps de masse (18), le pas de l'engrenage correspondant globalement à l'espacement des corps de masse (18).

2. Dispositif de serrage rotatif suivant la revendication 1, caractérisé en ce que l'engrenage, par exemple les cavités (23), de la roue d'entraînement (11, 12) est conçu de telle manière que les corps de masse (18), au moment où ils s'engrènent de façon à chevaucher l'engrenage, par exemple les cavités (23), restent en permanence en contact les uns avec les autres.

3. Dispositif de serrage rotatif suivant la revendication 2, caractérisé en ce que l'engrenage de la roue d'entraînement (11, 12) est constitué de cavités (23) qui s'étendent au-delà de la périphérie externe de la roue d'entraînement.

4. Dispositif de serrage rotatif suivant l'une des revendications 1 à 3, caractérisé en ce que l'engrenage de la roue d'entraînement (11, 12) prend la forme de cavités (23) en forme de cuvettes qui sont disposées sur la périphérie externe de la roue d'entraînement et sont adaptées à la forme des corps de masse (18).

5. Dispositif de serrage rotatif suivant la revendication 4, caractérisé en ce que les cavités (23) en forme de cuvettes disposées de manière continue sur la périphérie de la roue d'entraînement (11, 12) sont contiguës.

6. Dispositif de serrage rotatif suivant la revendication 4, caractérisé en ce que les cavités (23) en forme de cuvettes disposées de manière continue sur la périphérie de la roue d'entraînement (11, 12) se chevauchent entre elles sur une petite surface.

7. Dispositif de serrage rotatif suivant l'une des revendications 1 à 6, caractérisé en ce que les corps de masse (18) prennent la forme de billes de masse et les cavités (23) en forme de cuvettes sont des demi-coquilles sphériques.

8. Dispositif de serrage rotatif suivant l'une des revendications 1 à 7, caractérisé en ce que le rayon des cavités (23) en forme de cuvettes se trouve sur le diamètre de butée (26) défini par les points de contact théoriques des billes de masse successives (18).

9. Dispositif de serrage rotatif suivant l'une des revendications 1 à 8, caractérisé en ce que les cavités (23) en forme de cuvettes sont élargies en forme d'entonnoir.

10. Dispositif de serrage rotatif suivant l'une des revendications 1 à 9, caractérisé en ce que les cavités (23) en forme de cuvettes ont une transition de l'une à l'autre.

11. Dispositif de serrage rotatif suivant la revendication 10, caractérisé en ce que la transition entre les cavités (23) en forme de cuvettes est située sur un chemin circulaire entre le centre des cavités (23) en forme de cuvettes, le chemin circulaire ayant un diamètre correspondant au diamètre de la cavité (23) en forme de cuvette.

12. Dispositif de serrage rotatif suivant l'une des revendications 1 à 11, caractérisé en ce que le diamètre externe (27) de la roue d'entraînement (11, 12) est supérieur d'un diamètre de bille de masse, au maximum, au diamètre de butée (26) des billes de masse (18).

13. Dispositif de serrage rotatif suivant l'une des revendications 1 à 12, caractérisé en ce que les billes de masse (18) sont mises en contact les unes avec les autres comme dans un magasin au moyen d'une enveloppe souple (61).

14. Dispositif de serrage rotatif suivant la revendication 13, caractérisé en ce que l'enveloppe (61) comprend un tube en plastique dans lequel les billes de masse (18) sont logées et positionnées.

15. Dispositif de serrage rotatif suivant la revendication 13, caractérisé en ce que l'enveloppe (61) comprend un revêtement par extrusion d'une matière adéquate.

16. Dispositif de serrage rotatif suivant l'une des revendications 1 à 15, caractérisé en ce que les billes de masse (18) sont guidées sur une trajectoire tangentielle au-delà de la périphérie externe de la roue d'entraînement (11, 12, 54) puis, après qu'elles se sont engagées dans l'engrenage, par exemple dans les cavités (23, 55) de la roue d'entraînement, sont guidées directement dans une chambre de récupération (71).

17. Dispositif de serrage rotatif suivant la revendication 16, caractérisé en ce que la zone d'action entre les billes de masse (18) et l'engrenage, par exemple les cavités (23, 55) de la roue d'entraînement, s'étend sur un angle circonférentiel maximal de 45°.

18. Dispositif de serrage rotatif suivant l'une des revendications 1 à 17, caractérisé en ce que la roue d'entraînement (11, 12) comporte, sur sa périphérie, une rainure (24), qui coupe les cavités (23) en forme de cuvettes, afin de recevoir un guide en sabre (14, 15) fixé dans le logement pour les billes de masse (18).

19. Dispositif de serrage rotatif suivant la revendication 18, caractérisé en ce qu'un guide en sabre respectif (15, 14) est prévu aussi bien dans la région d'entrée (28) de la roue d'entraînement (11, 12) que dans la région de sortie (29) pour les billes de masse (18) sur la roue d'entraînement (11, 12).

20. Dispositif de serrage rotatif suivant l'une des revendications 1 à 19, caractérisé en ce que la roue d'entraînement (11, 12) est divisée en deux parties dans la région de la rainure (24) et la première moitié (11) de la roue d'entraînement est accouplée à l'arbre d'enroulement de ceinture (10).

21. Dispositif de serrage rotatif suivant la revendication 20, caractérisé en ce que la moitié (11) de la roue d'entraînement associée à l'arbre d'enroulement de ceinture (10) est solidaire de l'arbre d'enroulement de ceinture (10).

22. Dispositif de serrage rotatif suivant la revendication 20 ou 21, caractérisé en ce que les deux moitiés (11, 12) de la roue d'entraînement sont composées de matières différentes.

23. Dispositif de serrage rotatif suivant la revendication 1, caractérisé en ce que le conduit (56) est ménagé dans un tube (16, 62), qui est fixé sur le rétracteur de ceinture (50) et a une trajectoire hélicoïdale dirigée depuis l'extérieur en direction de l'arbre d'enroulement de ceinture (10) et ayant un rayon décroissant par rapport à l'arbre d'enroulement de ceinture (10).

24. Dispositif de serrage rotatif suivant la revendication 23, caractérisé en ce que, en vue du montage du tube (16) sur le logement du rétracteur de ceinture, un embout (22) composé d'une matière résistante est muni d'un profilé ajusté (42, 44) pour permettre la fixation du tube (16) sur l'embout (22).

25. Dispositif de serrage rotatif suivant la revendication 24, caractérisé en ce que le tube (16) est muni d'un rebord (41) et l'embout (22) est muni d'une gorge correspondante (42) pour recevoir le rebord (41) du tube (16).

26. Dispositif de serrage rotatif suivant la revendication 24, caractérisé en ce que le tube (16), à son extrémité libre, peut être suspendu par un coude en forme de U (43) dans un logement de forme correspondante (44) dans l'embout (22).

27. Dispositif de serrage rotatif suivant la revendication 23, caractérisé en ce que le tube (16, 62) est monté d'une manière permettant une transmission de charge sur le logement du rétracteur de ceinture au moyen de dispositifs de fixation appropriés et séparés.

28. Dispositif de serrage rotatif suivant la revendication 23, caractérisé en ce que le tube (62) est encastré dans un capot (63) composé de matière plastique qui est accouplé au logement du rétracteur de ceinture.

29. Dispositif de serrage rotatif suivant l'une des revendications 23 à 28, caractérisé en ce que le tube (16, 62) est une pièce résistante sans soudure.

30. Dispositif de serrage rotatif suivant l'une des revendications 23 à 28, caractérisé en ce que le tube (16, 62) comprend deux moitiés qui sont soudées l'une à l'autre à la molette.

31. Dispositif de serrage rotatif suivant l'une des revendications 23 à 30, caractérisé en ce que le tube (62) reçoit le générateur de gaz (65) destiné à entraîner les billes de masse (18) dans son axe longitudinal au-delà des billes de masse (18), le générateur de gaz étant fixé dans le tube (62) au moyen d'un profilé (66, 69).

32. Dispositif de serrage rotatif suivant l'une des revendications 23 à 31, caractérisé en ce qu'un piston d'entraînement (19, 67) composé d'une matière élastique est disposé entre le générateur de gaz (17, 65) et les billes de masse (18).

33. Dispositif de serrage rotatif suivant la revendication 31, caractérisé en ce que le piston d'entraînement (19, 67), afin de définir un volume initial (68), est fixé de manière espacée par rapport au générateur de gaz au moyen de profilés (66, 69) dans le tube (62).

34. Dispositif de serrage rotatif suivant l'une des revendications 23 à 33, caractérisé en ce que le piston d'entraînement (19) est soutenu contre le générateur de gaz au moyen d'un ressort de soutien (45).

35. Dispositif de serrage rotatif suivant l'une des revendications 23 à 34, caractérisé en ce que des moyens d'écartement (46) prévus à la périphérie extérieure du piston d'entraînement (19) sont dirigés de manière élastique vers l'extérieur et s'engagent dans une rainure (47) qui est disposée dans la direction de déplacement des billes de masse dans le tube, à l'extrémité de la distance de déplacement, et fixent le piston d'entraînement (19) dans le tube (16).

36. Dispositif de serrage rotatif suivant l'une des revendications 23 a 34 caractérisé en ce que des orifices de trop-plein (48) pour l'évacuation du fluide moteur sont disposés à l'extrémité de la course du piston d'entraînement (19) dans le tube (16).

37. Dispositif de serrage rotatif suivant l'une des revendications 23 à 36, caractérisé en ce qu'un dispositif de détente de la pression sous la forme d'un orifice dont l'ouverture est commandée par un point de rupture (49) est prévu dans la région du volume initial (68) entre le générateur de gaz et le piston d'entraînement (19).

38. Dispositif de serrage rotatif suivant l'une des revendications 1 à 37, comportant un récipient de collecte pour les corps de masse après leur course dans le canal, caractérisé en ce que l'on dispose, comme système de collecte, un tube ouvert (70) en matériau flexible, qui débouche dans une chambre de collecte (71).

39. Dispositif de serrage rotatif suivant l'une des revendications 1 à 37, comportant un récipient de collecte pour les corps de masse après leur course dans le canal, caractérisé en ce que le système de collecte est disposé de manière repliée autour du dispositif d'étanchéité rotatif et peut se déplier au déclenchement du dispositif d'étanchéité rotatif .
